# EUROPEAN PATENT APPLICATION

(11) **EP 3 378 332 A1**
(43) Date of publication of application: **26.09.2018**
(21) Application number: 17191469.0
(22) Date of filing: 15.09.2017
(51) Int. Cl.: A23L 27/00, A23L 29/212, A23L 29/238, A23L 29/256, A23L 29/262, A23L 29/269, A23L 23/10

(54) **FAT FREE FOOD PRODUCT**

(30) Priority: 24.03.2017 US 201715468400
(71) Applicant: Sumesa S.A., Guayaquil (EC)
(72) Inventor: MEDINA, Jorge, Guayaquil (EC); RIQUERO, Mariuxi, Guayaquil (EC); GARCIA, Jorge Julian, Guayaquil (EC)
(74) Representative: Barker Brettell LLP

(57) **Abstract**

Embodiments of the invention provide a fat free food product and method of making. In some embodiments, the food product is bouillon. The fat free food product is anhydrous, and contains a protein and a zero-fat binder. The binder includes a starch, an edible polyhydric alcohol, and a gum. The fat free food product has a protein content of 1.15% to 4.5% w/w. The food product contains no added fat.

## Description

### FIELD OF THE INVENTION

Embodiments of the invention refer to anhydrous fat free food products and methods of making.

### BACKGROUND

Bouillon cubes or granules are compressed stock that is generally dissolved for use. Broth is the strained liquid left from cooking vegetables, meat, and/or fish in water. Stock is similar to broth, but cooked more slowly and usually has a more intense flavor than broth. Current methods of making bouillon include the addition of fats and oils as a binder (to hold the ingredients together), resulting in a bouillon product that includes added fats and oils. Current bouillon products are dissolvable only in hot water (i.e. 80 - 100 Centigrade degrees) since fats and oils will only dissolve in such at high temperatures. There exists a need for improvements in bouillon products and methods of making.

### SUMMARY OF THE INVENTION

Some aspects of the invention include a fat free food product prepared by a process of: preparing a premix; mixing a first component with a second component to produce a first mixture; mixing the premix with the first mixture to form a second mixture; and mixing the second mixture with the third component. The premix comprises a protein in an amount of 1.15% up to 4.5% by weight of the fat free food product. The first component is a starch. The second component is an edible polyhydric alcohol. The third component is a gum. "Fat free" is defined as no added fat and less than 0.5 g of fat per serving.

Some aspects of the invention include a method of producing a fat free food product, the method comprising: preparing a premix; mixing a first component with a second component to produce a first mixture; mixing the premix with the first mixture to form a second mixture; and mixing the second mixture with the third component. The premix comprises a protein in an amount of 1.15% up to 4.5% by weight of the fat free food product. The first component is a starch. The second component is an edible polyhydric alcohol. The third component is a gum. "Fat free" is defined as no added fat and less than 0.5 g of fat per serving.

Some aspects of the invention include a fat free food product comprising: a protein in an amount of 1.15% up to 4.5% by weight of the fat free food product; and a fat free binder comprising a starch, an edible polyhydric alcohol, and a gum. "Fat free" is defined as no added fat and less than 0.5g of fat per serving.

Some aspects of the invention include a fat free food product consisting essentially of: a protein in an amount of 1.15% up to 4.5% by weight of the fat free food product; a fat free binder comprising a starch, an edible polyhydric alcohol, and a gum; and flavoring elements. "Fat free" is defined as no added fat and less than 0.5g of fat per serving.

In some aspects of the invention, the fat free food product is anhydrous. In some aspects of the invention, the fat free food product is fully or substantially anhydrous. In some aspects of the invention, the fat free food product is bouillon.

In some aspects of the invention, the protein is selected from the group of: chicken, beef, turkey, lamb, goose, rabbit, fish, cuy, or hydrolyzed vegetable protein.

In some aspects of the invention, the second component is selected from the group of: propylene glycol, glycerol, polyethylene glycol, or sorbitol.

In some aspects of the invention, the third component is selected from the group: carrageenan, guar gum, xanthan gum, locust bean gum, cellulose, or carob bean gum.

In some aspects of the invention, the first component comprises cornmeal. In some aspects of the invention, the first component comprises cornstarch.

In some aspects of the invention, the first component is 1 % to 20% by weight of the fat free food product.

In some aspects of the invention, the second component is 1% to 15% by weight of the fat free food product.

In some aspects of the invention, the third component is 0.2% to 25% by weight of the fat free food product.

### BRIEF DESCRIPTION OF THE FIGURES

The accompanying drawings, which are incorporated in and constitute a part of this specification, illustrate several embodiments of the present invention and together with the description, serve to explain the principles of the present invention.
Figure 1 shows a process flow diagram in accordance with some embodiments of the invention.
Figure 2 shows: an example shape of a bouillon cube formed in accordance with some embodiments of the invention.

The drawings are not necessarily to scale. The drawings are merely representations, not necessarily intended to portray specific parameters of the invention. The drawings are intended to depict only example embodiments of the invention, and therefore should not be considered as limiting in scope. In the drawings, like numbering may represent like elements. Furthermore, certain elements in some of the figures may be omitted, or illustrated not-to-scale, for illustrative clarity.

### DETAILED DESCRIPTION OF EMBODIMENTS OF THE PRESENT INVENTION

Embodiments of the invention provide a fat free food product and method of making. In embodiments, the food product is bouillon. The fat free food product is anhydrous, and contains a protein and a completely or substantially zero-fat binder. The binder includes a starch, an edible polyhydric alcohol, and a gum. The fat free food product has a protein content of 1.15% to 4.5% w/w ("weight for weight"; note that "w/w" and "by weight" have the same meaning, and are used interchangeably herein). The food product contains no or substantially no added fat.

The terminology used herein is for the purpose of describing particular embodiments only and is not intended to be limiting of this disclosure. As used herein, the singular forms "a", "an", and "the" are intended to include the plural forms as well, unless the context clearly indicates otherwise. Furthermore, the use of the terms "a", "an", etc., do not denote a limitation of quantity, but rather denote the presence of at least one of the referenced items. It will be further understood that the terms "comprises" and/or "comprising", or "includes" and/or "including", when used in this specification, specify the presence of stated features, regions, integers, steps, operations, elements, and/or components, but do not preclude the presence or addition of one or more other features, regions, integers, steps, operations, elements, components, and/or groups thereof.

Reference throughout this specification to "one embodiment," "an embodiment," "some embodiments", or similar language means that a particular feature, structure, or characteristic described in connection with the embodiment is included in at least one embodiment of the present invention. Thus, appearances of the phrases "in one embodiment," "in an embodiment," "in some embodiments", and similar language throughout this specification may, but do not necessarily, all refer to the same embodiment.

Moreover, the described features, structures, or characteristics of the invention may be combined in any suitable manner in one or more embodiments. It will be apparent to those skilled in the art that various modifications and variations can be made to the present invention without departing from the spirit and scope and purpose of the invention. Thus, it is intended that the present invention cover the modifications and variations of this invention provided they come within the scope of the appended claims and their equivalents. Reference will now be made in detail to the preferred embodiments of the invention.

Formulations containing a high percentage of fat can cause serious diseases such as: obesity, cardiovascular diseases, and hypertension, among many others; to living beings who consume these products, whether human or animal.

In addition, formulations containing fats can cause problems in the compaction process. For example, fats can cause damage to the equipment used, such as: mixer, extruders, presses; since these fats can clog these other ingredients within their structures. Embodiments of the present invention make such damage much less likely since added fats and added oils are not constituents.

Products, according to the present invention, may be in the form of compact mixtures, semisolid formulations, and cube shapes, among others. The products dissolve easily quickly in either hot or cold water. The dissolution starts at approximately 10°C. These products dissolve in temperatures ranging from approximately 10°C easily and extending to temperatures as high as 90°C or over. Previously, prior art formulations would only dissolve in hot water of approximately 80°C and up.

Embodiments of the present invention include completely or substantially zero-fat binders. No fat is added to the product. This creates a fat free final product in accordance with the standards set forth in 21 CFR 21, 101.62 (2016), which recites, *inter alia:*
(b) *Fat content claims.* (1) The terms "fat free," "free of fat," "no fat," "zero fat," "without fat," "negligible source of fat," or "dietarily insignificant source of fat" or, in the case of milk products, "skim" may be used on the label or in labeling of foods, provided that:
   (i) The food contains less than 0.5 gram (g) of fat per reference amount customarily consumed and per labeled serving or, in the case of a meal product or main dish product, less than 0.5 g of fat per labeled serving; and
   (ii) The food contains no added ingredient that is a fat or is generally understood by consumers to contain fat unless the listing of the ingredient in the ingredient statement is followed by an asterisk that refers to the statement below the list of ingredients, which states "adds a trivial amount of fat," "adds a negligible amount of fat," or "adds a dietarily insignificant amount of fat;" and
   (iii) As required in 101.13(e)(2), if the food meets these conditions without the benefit of special processing, alteration, formulation, or reformulation to lower fat content, it is labeled to disclose that fat is not usually present in the food (e.g., "broccoli, a fat free food").

Embodiments of the present invention also include a fat free final product in accordance with the standards set forth by the Food and Agriculture Organization of the United Nations (FAO). More specifically, Section 5 of the Nutrition and Health Claims (CAC/GL 23-1997) promulgated by the FAO, includes a chart titled: "Table of conditions for nutrient content claims", which contains, *inter alia,* information on conditions for stating a product is free of fat. A portion of the chart is reproduced herein below:

**Table of conditions for nutrient content claims**

| **COMPONENT** | **CLAIM** | **CONDITIONS (not more than)** |
|---|---|---|
| Energy | Low | 40 kcal (170 kJ) per 100 g (solids) |
| | | or |
| | | 20 kcal (80 kJ) per 100 ml (liquids) |
| | Free | 4 kcal per 100 ml (liquids) |
| Fat | Low | 3 g per 100 g (solids) |
| | | 15 g per 100 ml (liquids) |
| | Free | 0.5 g per 100 g (solids) or 100 ml (liquids) |

Accordingly, fat free is defined in embodiments herein as no added fat and less than 0.5 g of fat per serving. Embodiments of the food product of the present invention contain no added fat, and contain less than 0.5 g of fat per serving. In some embodiments, a serving of the fat free food product of the present invention is approximately 4g. Additionally, the need for special processing, alteration, formulation, or reformulation to lower fat content is eliminated. Embodiments of the present invention include a fat free food product comprising a completely or substantially zero-fat binder. The word "substantially" herein is interpreted to mean "to a significant extent", but that trace amounts may be present. The binder may include a starch, an edible polyhydric alcohol, and a gum. The food product further includes a protein in an amount of 1.15% up to 4.5% by weight of the fat free food product. In some embodiments, spices may be included in the fat free food product, as well.

Animal protein (chicken, for example) contains remaining traces of fat (0.5% to 20% typically) after a dehydration process. Accordingly, the percentage of protein in embodiments ranges from 1.15% to 4.5% w/w but best results were obtained in the range of 1.15% w/w to 2.0% w/w. This can result in a final product than contains as little as 0.036 g max of fat content. Therefore, in an example, 4 g of bouillon would be rehydrated in 500 g of water, in order to prepare a meal. The serving portion is 250 g of the rehydrated product. In this way, the maximum fat content on a serving portion is no more than 0.018 g per serving. This shows that the maximum content of fat in the serving portion is much lower than 0.5 g.

Products according to the present invention readily separate in response to touch. Unlike prior art products, no cutting is required if less than all of the cube or roll is to be used at a particular time.

Particularly, the product of embodiments of the invention can be up to 90% more effective dissolving in water without mixing and high temperature. Prior art bouillon includes fats, and therefore, for dissolution of the bouillon, the melting point of the fat must be taken into account. Therefore, a temperature of 80 to 100 °C is required for dissolution and rehydration.

Embodiments of the present invention have a longer shelf life than prior art bouillon. Added fats in prior art bouillon often begin to break down or spoil over time. Methods of the present invention form bouillon cubes maintaining a stability of 90.0% at a lifecycle of 1 year. Applicant's testing has found that after one year at accelerated conditions each component of the formulation remains with 90% of the organoleptic properties.

Prior art methods of making bouillon require a discontinuous process and time maturation. Embodiments of the invention include processes that are performed in a relatively short time period without need for intermittent delays, which can be time consuming and costly. In order to produce low fat bouillon in prior art methods, mixed ingredients must age for 24 hours before being sent to the press for forming cubes. Little to no aging is needed in embodiments of the present invention.

Some embodiments of the present invention are a fat free food product including a protein in an amount of 1.15% up to 4.5% by weight of the fat free food product and a fat free binder comprising a starch, an edible polyhydric alcohol, and a gum.

Some embodiments of the present invention include a fat free food product consisting essentially of: a protein in an amount of 1.15% up to 4.5% by weight of the fat free food product; a fat free binder comprising a starch, an edible polyhydric alcohol, and a gum; and flavoring elements, including at least one of the following: turmeric, cumin, oregano, nutmeg, cloves, rosemary, thyme, pepper, curry, salt, salt replacers, glutamate, inosinate, or sugar. The term "consisting essentially of" herein is intended to mean that the specified materials or steps are included, as well as those that do not materially affect the basic and novel characteristics of the claimed invention.

In some embodiments, the protein is selected from the group: chicken, beef, turkey, lamb, goose, rabbit, fish, cuy (guinea pig), or hydrolyzed vegetable protein. In some embodiments, the edible polyhydric alcohol is selected from the group of: propylene glycol, glycerol, polyethylene glycol, or sorbitol. In some embodiments, the gum is selected from the group: carrageenan, guar gum, xanthan gum, locust bean gum, cellulose, or carob bean gum.

In some embodiments, the starch includes cornmeal, cornstarch, or a combination of the two. In some embodiments, the first component is 1% to 20% by weight of the fat free food product. In some embodiments, the alcohol is 1 % to 15% by weight of the fat free food product. In some embodiments, the gum is 0.2% to 25% by weight of the fat free food product.

Some embodiments of the present invention include a method of making a fat free food product. Some embodiments of the present invention include the fat free food product produced by the method.

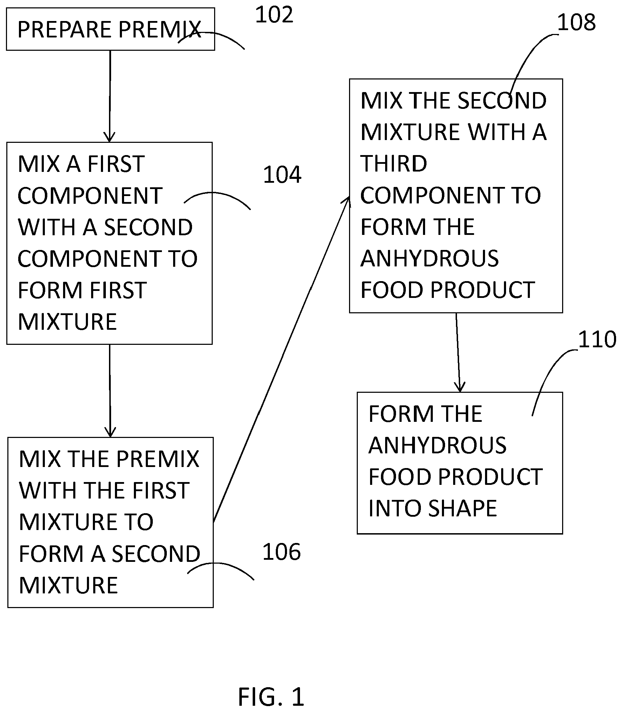

FIG. 1 shows a block diagram of a method in accordance with embodiments of the invention. At block 102, a pre-mix is prepared. The premix includes a protein powder, representing 1.15% to 4.50% (w/w) of the finished product. The powder may be derived from meat or vegetable. The meat may be chicken, beef, lamb, turkey, rabbit, fish, goose, cuy (guinea pig), or other suitable animal protein. In some embodiments, the protein is Hydrolyzed Vegetable Protein.

In some embodiments, the premix further includes flavoring elements such as spices and/or flavor enhancers. Non-limiting examples of the spices include: turmeric, cumin, oregano, nutmeg, cloves, rosemary, thyme, pepper, or curry in amounts of 2% to 10% w/w of the total product, but best results were obtained with 4% to 8% w/w. In some embodiments, the premix includes flavor enhancers, such as: salt (e.g., marine salt), salt replacers, glutamate, inosinate, and/or sugar. The flavor enhancers may be included in a proportion of 25% to 63% w/w of the total product, but with best results between 35% to 53% w/w. In embodiments, the mixing is performed for approximately 5-15 minutes.

At block 104, a first component and a second component are mixed to form a first mixture. In some embodiments, the first component is a starch, e.g., cornmeal or cornstarch. In some embodiments, the starch is 1 % to 20% w/w of the total product, but best results were found with 6% to 15% w/w of the total product. In some embodiments, the second component is an edible polyhydric alcohol. In some embodiments, the alcohol is selected from the group: propylene glycol, glycerol, polyethylene glycol, sorbitol, or other edible alcohol. In some embodiments, the alcohol is a polyhydric alcohol (fat free alcohols). In some embodiments, the alcohol is added in an amount of 1 % to 15% w/w of the total product, but preferably 2% to 10% w/w of the total product. Salt is also typically added with the second component. Salt may be added in this step in an amount of 20% to 60% (w/w) of the total product, but preferably 30% to 50% of the total product. In embodiments, the mixing is performed for approximately 5-15 minutes.

At block 106, the premix and the first mixture are mixed to form a second mixture. At block 108, the second mixture is mixed with a third component to form the anhydrous food product in accordance with embodiments of the present invention. In some embodiments, the third component is an edible gum. In some embodiments, the edible gum is selected from the group: carrageenan, guar gum, xanthan gum, locust bean gum, cellulose, carob bean gum, or other edible gums, representing the 0.2% to 25% w/w of the finished product, but preferably 0.4% to 12% w/w of the finished product. In embodiments, the mixing is performed for approximately 5-15 minutes.

In some embodiments, each of the mixing steps uses a V-shape powder mixer and a Direct Compression tablet machine (Rotary and Punch ones) and may be performed at room temperature. An example V shape powder mixer is Model No. FGD 600 of Tianfan Pharmaceutical of Shanghai, China. An example of Rotary Direct Compression machine is Model No. ZP25D of Tianfan Pharmaceutical of Shanghai, China.

At block 110, the food product is formed into a shape. The use of sodium chloride crystals (typically added with the second component) allows the product to be divided into cubes, for example, using Direct Press equipment. The difference in particle size of sodium chloride (table salt) and other components of the bouillon formulation

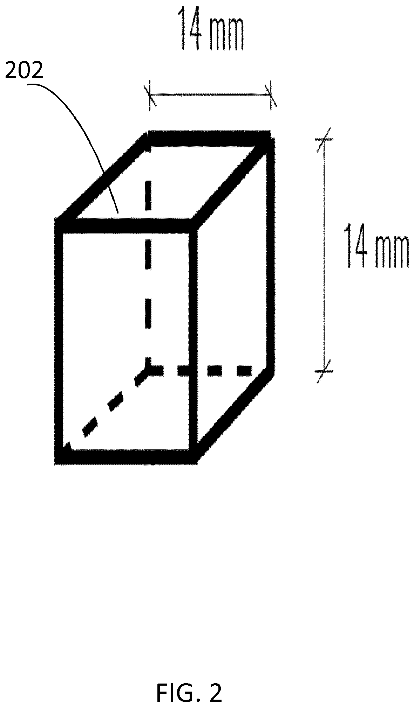

(starches, alcohol, and gum), lets air remain trapped in the particle bridges promoted by compression, increasing the porosity level, in order to promote a strong structure and shape, enough to support a high level of pressure or shock, but with the ability to separate the mass in exact portions just with the pressure of the fingers. In this way the end user will be able to use the final product with a desired portion even when a full cube is not needed. An example cube shape is shown as 202 at FIG. 2. In the example, the cube is 14 millimeters by 14 millimeters. It should be recognized that this shape and size is an example, and others are included within the scope and spirit of the invention. In some embodiments, the fat free food product is packaged.

In embodiments, the fat free food product of the present invention is anhydrous or substantially anhydrous. In some embodiments, no water is added during the method of production. In some embodiments, substantially no water is added during the method of production. In some embodiments, the fat free food product is bouillon. An end user can open the packaging and add the inventive product, or a portion thereof, to water to make stock, soup, or other suitable food.

Embodiments of the fat free food product includes no added fat or oil to bind, or for any other reason. The first component, second component, and third component together form a completely or substantially zero fat binder. The first component, second component, and third component together with the premix, form an anhydrous fat free food product.

### Example Methods in Accordance with Embodiment of the Invention

### EXAMPLE 1

1. Dry powders such as, salt, glutamate, riboflavin, turmeric, cumin, nutmeg, chicken protein and Hydrogenated Vegetable Protein, representing 75% w/w of the total product are pre-mixed in a first mixer, for 17 minutes, continuously to produce a premix.
2. A mix of corn starch and cornmeal in an amount of 17.4% of the total product is added to a second mixer. Propylene glycol is also added to the second mixer in an amount of 7.4% of the total product w/w. They are continuously mixed for 13 minutes to produce a first mixture.
3. The first mixture is added to the premix in order to create a second mixture. They are mixed continuously for 13 minutes.
4. A third component, Guar gum, in a percentage of 0.2% is added to the second mixture and mixed by 13 minutes to produce an anhydrous fat free food product.
5. The anhydrous fat free food product is produced at the desired shape by direct compression or other suitable process.

### EXAMPLE 2

1. Dry powders are premixed for 10 minutes in a first mixer. The dry powders include Beef protein, Hydrogenated Vegetable Protein (HVP), salt, glutamate, riboflavin, turmeric, cumin, oregano, nutmeg, cloves, rosemary, thyme, pepper, and curry, representing 74.7% w/w of the total product. These substances are mixed for 10 minutes continuously to produce a premix.
2. A mix of corn starch and cornmeal in an amount of 15 % w/w of the total product is added to a second mixer. Sorbitol is added to the second mixture in an amount of 10% (w/w) of the total product. They are mixed for about 8 minutes. This forms a first mixture.
3. The first mixture is added to the premix in order to create a second mixture. They are mixed for about 5 minutes.
4. A third component, Locus Bean Gum, in an amount of 0.3% w/w of the total product, is added to the second mixture and mixed by 10 minutes, to produce an anhydrous fat free food product in accordance with embodiments of the present invention.
5. The anhydrous fat free food product is produced at the desired shape by direct compression or other suitable process.

### EXAMPLE 3

1. Dry powders are premixed for 10 minutes in a first mixer. The dry powders include chicken protein, Hydrogenated Vegetable Protein (HVP), salt, glutamate, riboflavin, turmeric, cumin, oregano, nutmeg, cloves, rosemary, thyme, pepper, and curry, representing 63% w/w of the total product. These substances are mixed for 10 minutes continuously to produce a premix.
2. A mix of corn starch and cornmeal representing 18% w/w of the total product is added to a second mixer and continuously mixing for about 8 minutes. Glycerin is added to the second mixer in an amount of 7% w/w of the total product. They are mixed for about 8 minutes. This forms a first mixture.
3. The first mixture is added to the premix in order to create a second mixture. The mixing is performed continuously for about 5 minutes.
4. A third component, cellulose, in an amount of 12% w/w of the total product, is added to the second mixture and mixed for 10 minutes, to produce an anhydrous fat free food product in accordance with embodiments of the present invention.
5. The anhydrous fat free food product is produced at the desired shape by direct compression or other suitable process.

### EXAMPLE 4

1. Dry powders are premixed for 10 minutes in a first mixer. The dry powders include fish protein, Hydrogenated Vegetable Protein (HVP), salt, glutamate, riboflavin, turmeric, cumin, oregano, nutmeg, cloves, rosemary, thyme, pepper, and curry, representing 74.5% w/w of the total product. These substances are mixed for 10 minutes continuously to produce a premix.
2. A mix of corn starch and cornmeal representing 15.83% w/w of the total product is added to a second mixer. Polyethylene glycol is added to the second mixer in an amount of 9.17% (w/w) of the total product. They are mixed for about 8 minutes. This forms a first mixture.
3. The first mixture is added to the premix in order to create a second mixture. The mixing is performed continuously for about 5 minutes.
4. A third component, Xanthan Gum, in an amount of 0.5% w/w of the total product is added to the second mixture and mixed for 10 minutes, to produce an anhydrous fat free food product in accordance with embodiments of the present invention.
5. The anhydrous product is produced at the desired shape by direct compression or other suitable process.

### EXAMPLE 5

1. Dry powders are premixed for 10 minutes in a first mixer. The dry powders include turkey protein, Hydrogenated Vegetable Protein (HVP), salt, glutamate, riboflavin, turmeric, cumin, oregano, nutmeg, cloves, rosemary, thyme, pepper, and curry, representing 74.5% w/w of the total product. These substances are mixed for 10 minutes continuously to produce a premix.
2. A mix of corn starch and cornmeal representing 13.65% w/w of the total product is added to a second mixer. Propylene glycol is added to the second mixer in an amount of 11.35% w/w of the total product. They are mixed for about 8 minutes. This forms a first mixture.
3. The first mixture is added to the premix in order to create a second mixture. The mixing is performed continuously for about 5 minutes.
4. A third component, Locus Bean Gum, in an amount of 0.5% w/w of the total product is added to the second mixture and mixed by 10 minutes, to produce an anhydrous fat free food product in accordance with embodiments of the present invention.
5. The anhydrous fat free product is produced at the desired shape by direct compression or other suitable process.

### EXAMPLE 6

1. Dry powders are premixed for 10 minutes in a first mixer. The dry powders include pork protein, Hydrogenated Vegetable Protein (HVP), salt, glutamate, riboflavin, turmeric, cumin, oregano, nutmeg, cloves, rosemary, thyme, pepper, and curry, representing 73% w/w of the total product. These substances are mixed for 10 minutes continuously to produce a premix.
2. A mix of corn starch and cornmeal representing 17% w/w of the total product is added to a second mixer. Glycerin is added to the second mixer in an amount of 8% w/w of the total product. This forms a first mixture.
3. The first mixture is added to the premix in order to create a second mixture. The mixing is performed continuously for about 5 minutes.
4. A third component, carrageenan, representing 2% w/w of the total product is added to the second mixture and mixed by 10 minutes, to produce an anhydrous fat free food product in accordance with embodiments of the present invention.
5. The anhydrous fat free product is produced at the desired shape by direct compression or other suitable process.

### EXAMPLE 7

1. Dry powders are premixed for 10 minutes in a first mixer. The dry powders include rabbit protein, Hydrogenated Vegetable Protein (HVP), salt, glutamate, riboflavin, turmeric, cumin, oregano, nutmeg, cloves, rosemary, thyme, pepper, and curry, representing 68% w/w of the total product. These substances are mixed for 10 minutes continuously to produce a premix.
2. A mix of corn starch and cornmeal in an amount of 20% w/w of the total product is added to a second mixer. Propylene glycol is added to the second mixer in an amount of 5% w/w of the total product. They are mixed for about 8 minutes. This forms a first mixture.
3. The first mixture is added to the premix in order to create a second mixture. The mixing is performed continuously for about 5 minutes.
4. A third component, cellulose, in an amount of 7% w/w of the total product, is added to the second mixture and mixed by 10 minutes, to produce an anhydrous fat free food product in accordance with embodiments of the present invention.
5. The anhydrous fat free food product is produced at the desired shape by direct compression or other suitable process.

### EXAMPLE 8

1. Dry powders are premixed for 10 minutes in a first mixer. The dry powders include duck protein, Hydrogenated Vegetable Protein (HVP), salt, glutamate, riboflavin, turmeric, cumin, oregano, nutmeg, cloves, rosemary, thyme, pepper, and curry, representing 74.5% w/w of the total product. These substances are mixed for 10 minutes continuously to produce a premix.
2. A mix of corn starch and cornmeal representing 15% w/w of the total product is added to a second mixer. Sorbitol is added to the second mixer in an amount of 10% (w/w) of the total product. They are mixed for about 8 minutes. This forms a first mixture.
3. The first mixture is added to the premix in order to create a second mixture. The mixing is performed continuously for about 5 minutes.
4. A third component, Locus Bean Gum, in the amount of 0.5% w/w of the total product, is added to the second mixture and mixed by 10 minutes, to produce an anhydrous fat free food product in accordance with embodiments of the present invention.
5. The anhydrous fat free food product is produced at the desired shape by direct compression or other suitable process.

### EXAMPLE 9

1. Dry powders are premixed for 10 minutes in a first mixer. The dry powders include goose protein, Hydrogenated Vegetable Protein (HVP), salt, glutamate, riboflavin, turmeric, cumin, oregano, nutmeg, cloves, rosemary, thyme, pepper, and curry, representing 74.5% w/w of the total product. These substances are mixed for 10 minutes continuously to produce a premix.
2. A mix of corn starch and cornmeal representing 15% w/w of the total product is added to a second mixer. Sorbitol is added to the second mixer in an amount of 10% w/w of the total product. They are continuously mixed for about 8 minutes. This forms a first mixture.
3. The first mixture is added to the premix in order to create a second mixture. The mixing is performed continuously for about 5 minutes.
4. A third component, Locus Bean Gum, in an amount of 0.5% w/w of the total product is added to the second mixture and mixed by 10 minutes, to produce an anhydrous fat free food product in accordance with embodiments of the present invention.
5. The anhydrous fat free product is produced at the desired shape by direct compression or other suitable process.

### EXAMPLE 10

1. Dry powders are premixed for 10 minutes in a first mixer. The dry powders include cuy (guinea pig) protein, Hydrogenated Vegetable Protein (HVP), salt, glutamate, riboflavin, turmeric, cumin, oregano, nutmeg, cloves, rosemary, thyme, pepper, and curry, representing 74.7% w/w of the total product. These substances are mixed for 10 minutes continuously to produce a premix.
2. A mix of corn starch and cornmeal representing 16 % w/w of the total product is added to a second mixer. Propylene glycol is added to the second mixer in an amount of 9% w/w of the total product. They are mixed for about 8 minutes. This forms a first mixture.
3. The first mixture is added to the premix in order to create a second mixture. The mixing is performed continuously for about 5 minutes.
4. A third component, Xanthan Gum representing 0.3% w/w of the total product, is added to the second mixture and mixed by 10 minutes, to produce an anhydrous fat free food product in accordance with embodiments of the present invention.
5. The anhydrous fat free food product is produced at the desired shape by direct compression or other suitable process.

### EXAMPLE 11

1. Dry powders are premixed for 10 minutes in a first mixer. The dry powders include Hydrogenated Vegetable Protein (HVP), salt, glutamate, riboflavin, turmeric, cumin, oregano, nutmeg, cloves, rosemary, thyme, pepper, and curry, representing 74.3% w/w of the total product. These substances are mixed for 10 minutes continuously to produce a premix.
2. A mix of corn starch and cornmeal representing 17% w/w of the total product is added to a second mixer. Glycerin is added to the second mixer in an amount of 8% w/w of the total product. They are mixed for about 8 minutes. This forms a first mixture.
3. The first mixture is added to the premix in order to create a second mixture. The mixing is performed continuously for about 5 minutes.
4. A third component, carrageenan in an amount of 0.7% w/w of the total product, is added to the second mixture and mixed by 10 minutes, to produce an anhydrous fat free food product in accordance with embodiments of the present invention.
5. The anhydrous fat free food product is produced at the desired shape by direct compression or other suitable process.

### Example Formulations/Products in Accordance with Embodiments of the Invention

**Formulation 1**

| **Semi-compact Formulation Substances** | **Percentage (w/w)** |
|---|---|
| **Premix** | **85.689** |
| - Salt | 48.200 |
| - Chicken essence | 3.156 |
| - Others | 34.333 |
| **First Component** | **1.711** |
| - Cornstarch | 1.711 |
| **Second Component** | **7.600** |
| - Propylene glycol | 7.600 |
| **Third Component** | **5.000** |
| - Guar gum | 5.000 |
| **TOTAL:** | **100.000** |

**Formulation 2**

| **Semi-compact Formulation Substances** | **Percentage (w/w)** |
|---|---|
| **Premix** | **87.363** |
| - Salt | 43.257 |
| - Cornmeal | 6.275 |
| - Beef essence | 3.156 |
| - Others | 34.675 |
| **First Component** | **1.711** |
| - Cornstarch | 1.711 |
| **Second Component** | **3.025** |
| - Sorbitol | 3.025 |
| **Third Component** | **7.901** |
| - Locus bean gum | 7.901 |
| **TOTAL:** | **100.000** |

**Formulation 3**

| **Semi-compact Formulation Substances** | **Percentage (w/w)** |
|---|---|
| **Premix** | **79.689** |
| - Salt | 43.200 |
| - Fish essence | 3.156 |
| - Others | 33.333 |
| **First Component** | **1.711** |
| - Cornstarch | 1.711 |
| **Second Component** | **7.031** |
| - Glycerin | 7.031 |
| **Third Component** | **11.569** |
| - Cellulose | 11.569 |
| **TOTAL:** | **100.000** |

**Formulation 4**

| **Semi-compact Formulation Substances** | **Percentage (w/w)** |
|---|---|
| **Premix** | **78.999** |
| - Salt | 33.500 |
| - Chicken essence | 3.156 |
| - Others | 42.343 |
| **First Component** | **1.001** |
| - Cornstarch | 1.001 |
| **Second Component** | **9.173** |
| - Polyethylene glycol | 9.173 |
| **Third Component** | **10.827** |
| - Xanthan gum | 10.827 |
| **TOTAL:** | **100.000** |

**Formulation 5**

| **Semi-compact Formulation Substances** | **Percentage (w/w)** |
|---|---|
| **Premix** | |
| | **78.363** |
| - Salt | 34.257 |
| - Chicken essence | 3.156 |
| - Others | 40.950 |
| **First Component** | **1.711** |
| - Cornstarch | 1.711 |
| **Second Component** | **11.325** |
| - Propylene glycol alginate | 11.325 |
| **Third Component** | **8.601** |
| - Locus bean gum | |
| | 8.601 |
| **TOTAL:** | **100.000** |

**Formulation 6**

| **Semi-compact Formulation Substances** | **Percentage (w/w)** |
|---|---|
| **Premix** | **93.363** |
| - Salt | 48.257 |
| - Cornmeal | 6.275 |
| - Chicken essence | 3.156 |
| - Others | 35.675 |
| **First Component** | **1.711** |
| - Cornstarch | 1.711 |
| **Second Component** | **1.235** |
| - Glycerin | 1.235 |
| **Third Component** | |
| | **3.691** |
| - Carrageenan | 3.691 |
| **TOTAL:** | **100.000** |

**Formulation 7**

| **Semi-compact Formulation Substances** | **Percentage (w/w)** |
|---|---|
| **Premix** | **95.363** |
| - Salt | 53.257 |
| - Cornmeal | 6.275 |
| - Chicken essence | 4.156 |
| - Others | 31.675 |
| **First Component** | **1.711** |
| - Cornstarch | 1.711 |
| **Second Component** | **1.232** |
| - Propylene glycol | 1.232 |
| **Third Component** | **1.694** |
| - Cellulose | 1.694 |
| **TOTAL:** | **100.000** |

**Formulation 8**

| **Semi-compact Formulation Substances** | **Percentage (w/w)** |
|---|---|
| **Premix** | **96.363** |
| - Salt | 56.257 |
| - Chicken essence | 1.156 |
| - Others | 38.950 |
| **First Component** | **1.711** |
| - Cornstarch | 1.711 |
| **Second Component** | **1.617** |
| - Propylene glycol | 1.617 |
| **Third Component** | **0.309** |
| - Carrageenan | 0.309 |
| **TOTAL:** | **100.000** |

Each of the above-identified example formulations is an anhydrous fat free food product in accordance with embodiments of the invention. The fat free food product is semi-solid and compact. It is malleable for being shaped into cubes, rolls, or other suitable shapes. Inclusion of sodium chloride (table salt) in the second component enables cleavage into a cubic shape. An end user can open the packaging and add the inventive product, or a portion thereof, to water to make stock, soup, or other suitable food.

The foregoing description of various aspects of the invention has been presented for purposes of illustration and description. It is not intended to be exhaustive or to limit the invention to the precise form disclosed and, obviously, many modifications and variations are possible. Such modifications and variations that may be apparent to a person skilled in the art are intended to be included within the scope of the invention as defined by the accompanying claims. In addition, while a particular feature of the invention may have been disclosed with respect to only one of several embodiments, such feature may be combined with one or more features of the other embodiments as may be desired and advantageous for any given or particular application. Therefore, it is to be understood that the appended claims are intended to cover all such modifications and changes that fall within the true spirit of the invention.

## Claims

1. A fat free food product prepared by a process of:
preparing a premix;
mixing a first component with a second component to produce a first mixture;
mixing the premix with the first mixture to form a second mixture; and
mixing the second mixture with the third component;
wherein the premix comprises a protein in an amount of 1.15% up to 4.5% by weight of the fat free food product;
wherein the first component is a starch;
wherein the second component is an edible polyhydric alcohol;
wherein the third component is a gum; and
wherein "fat free" is defined as no added fat and less than 0.5 g of fat per serving.

2. A method of producing a fat free food product, the method comprising:
preparing a premix;
mixing a first component with a second component to produce a first mixture;
mixing the premix with the first mixture to form a second mixture; and
mixing the second mixture with the third component;
wherein the premix comprises a protein in an amount of 1.15% up to 4.5% by weight of the fat free food product;
wherein the first component is a starch;
wherein the second component is an edible polyhydric alcohol;
wherein the third component is a gum; and
wherein "fat free" is defined as no added fat and less than 0.5 g of fat per serving.

3. The fat free food product of claim 1 or the method of claim 2, wherein the protein is selected from the group of: chicken, beef, turkey, lamb, goose, rabbit, fish, cuy, or hydrolyzed vegetable protein.

4. The fat free food product or method of any preceding claim, wherein the second component is selected from the group of: propylene glycol, glycerol, polyethylene glycol, or sorbitol.

5. The fat free food product or method of any preceding claim, wherein the third component is selected from the group: carrageenan, guar gum, xanthan gum, locust bean gum, cellulose, or carob bean gum.

6. The fat free food product or method of any preceding claim,
wherein the first component comprises at least one of cornmeal or cornstarch, and
wherein the first component is 1% to 20% by weight of the fat free food product.

7. The fat free food product or method of any preceding claim, wherein the second component is 1% to 15% by weight of the fat free food product.

8. The fat free food product or method of any preceding claim, wherein the third component is 0.2% to 25% by weight of the fat free food product.

9. The fat free food product or method of any preceding claim, wherein the fat free food product is substantially anhydrous.

10. A fat free food product comprising:
a protein in an amount of 1.15% up to 4.5% by weight of the fat free food product; and
a fat free binder comprising a starch, an edible polyhydric alcohol, and a gum;
wherein "fat free" is defined as no added fat and less than 0.5g of fat per serving.

11. The fat free food product of claim 17, wherein the protein is selected from the group of: chicken, beef, turkey, lamb, goose, rabbit, fish, cuy, or hydrolyzed vegetable protein: and/or wherein the edible polyhydric alcohol is selected from the group of: propylene glycol, glycerol, polyethylene glycol, or sorbitol: and/orwherein the gum is selected from the group: carrageenan, guar gum, xanthan gum, locust bean gum, cellulose, or carob bean gum.

12. The fat free food product of claim 10 or 11,
wherein the starch comprises at least one of cornmeal or cornstarch, and
wherein the first component is 1% to 20% by weight of the fat free food product: and/or wherein the alcohol is 1 % to 15% by weight of the fat free food product: and/or wherein the gum is 0.2% to 25% by weight of the fat free food product: and/or wherein the fat free food product is substantially anhydrous.

13. A fat free food product consisting essentially of:
a protein in an amount of 1.15% up to 4.5% by weight of the fat free food product; and
a fat free binder comprising a starch, an edible polyhydric alcohol, and a gum; and
flavoring elements;
wherein "fat free" is defined as no added fat and less than 0.5g of fat per serving.

14. The fat free food product of claim 13, wherein the flavoring elements include at least one of the following: turmeric, cumin, oregano, nutmeg, cloves, rosemary, thyme, pepper, curry, salt, salt replacers, glutamate, inosinate, or sugar.

15. The fat free food product of claim 13 or 14, wherein the fat free food product is substantially anhydrous.
